# EUROPEAN PATENT APPLICATION

(11) **EP 4 782 248 A1**
(43) Date of publication of application: **29.07.2026**
(21) Application number: 26154446.4
(22) Date of filing: 27.01.2026
(51) Int. Cl.: B60L 1/02, B60L 53/22, B60L 58/25, B60L 58/26, B60L 58/27

(54) **METHOD, CONTROLLER, SYSTEM AND PROGRAM PRODUCT FOR HEATING TARGET POSITION OF VEHICLE**

(30) Priority: 27.01.2025 CN 202510126573
(71) Applicant: Volkswagen Group (China) Technology Company Limited, Hefei Anhui 230091 (CN)
(72) Inventor: ARNAOUT, Samy, Hefei, 230091 (CN); BRUNE, Kai, Hefei, 230091 (CN)
(74) Representative: Zimmermann & Partner Patentanwälte mbB

(57) **Abstract**

Embodiments of the present disclosure relate to a method, a controller, a vehicle heating system and a program product for heating a target position of a vehicle. The vehicle includes an inverter (104) for conversion between AC and DC between a motor (124) and a battery (108) of the vehicle. The inverter (104) includes a plurality of switching elements and a plurality of diodes connected in parallel with the plurality of switching elements. The method (200) comprises: controlling (202) the plurality of switching elements of the inverter so that the AC flows through at least one of the plurality of diodes to generate additional heat; and controlling (204) a coolant system of the vehicle to transfer the additional heat generated by the inverter to a target position of the vehicle for heating.

## Description

### TECHNICAL FIELD

The present disclosure relates to the field of vehicle, and more specifically, to a method, a controller, a vehicle heating system and a program product for heating a target position of a vehicle.

### BACKGROUND

In the field of new energy vehicle (NEV), the lithium battery generally serves as the traction battery. As the power source of the NEV, the traction battery inherently generates heat during charging and discharging operations. In this regard, the change of temperature greatly affects the efficiency of the lithium-ion battery. The performance of the traction battery is closely related to the battery temperature. As vehicles are required to run under complex road conditions and environmental circumstances, the ambient temperature surrounding the vehicle varies significantly. Therefore, batteries serving as the power supply of NEVs or electronic equipment are required to adapt to complex ambient temperatures. The low temperature environment is of particular concern.

At low temperatures, the internal resistance of the lithium-ion battery increases, and the electric energy released by the lithium-ion battery decreases. Therefore, batteries are required to have excellent low-temperature charging and discharging performance and high output and input power performance.

### SUMMARY

In a first aspect of the present disclosure, there is provided a method for heating a target position of a vehicle according to claim 1. The vehicle includes an inverter for a conversion between an alternating current (AC) and a direct current (DC) between a motor and a battery of the vehicle. The inverter includes a plurality of switching elements and a plurality of diodes connected in parallel with the plurality of switching elements. The method comprises: controlling the plurality of switching elements of the inverter to cause the AC to flow through at least one diode of the plurality of diodes to generate additional heat. The method further comprises controlling a coolant system of the vehicle to transfer the additional heat generated by the inverter to a target position of the vehicle for heating.

In a second aspect of the present disclosure, there is provided a controller according to claim 10. The controller includes: at least one processor; and memories coupled to the at least one processor and having instructions stored thereon, the instructions, when executed by the at least one processor, causing the controller to perform the method of the first aspect.

In a third aspect of the present disclosure, there is provided a vehicle heating system according to claim 11. The system includes an inverter for converting electric energy between a battery and a motor. The system further includes a coolant system in thermal contact with the inverter. The system further includes the controller according to the second aspect for controlling the coolant system to transfer heat generated by the inverter

In a fourth aspect of the present disclosure, there is provided a computer program product according to claim 12. The computer program product includes computer-executable instructions, and wherein the computer-executable instructions are executed by a processor to implement the method of the first aspect.

In a fifth aspect of the present disclosure, there is provided a computer-readable storage medium. The computer-readable storage medium stores computer-executable instructions thereon, and wherein computer-executable instructions are executed by a processor to implement the method of the first aspect.

It should be understood that what is described in Summary is not intended to define key or important features of the embodiments of the disclosure, nor is it intended to limit the scope of the disclosure. Other features of the present disclosure will be readily understood from the following description.

### BRIEF DESCRIPTION OF THE DRAWINGS

Through the following detailed description with reference to the accompanying drawings, the above and other features, advantages and aspects of example embodiments of the present disclosure will become more apparent. In the drawings, the same or similar reference numerals refer to the same or similar elements, wherein:
FIG. 1A illustrates a schematic diagram of an example vehicle in which various embodiments of the present disclosure may be implemented herein;
FIG. 1B illustrates a schematic diagram of an example driving system of an embodiment of the present disclosure;
FIG. 2 illustrates a flowchart of an example method for heating a battery according to some embodiments of the present disclosure;
FIGS. 3A-3E illustrate schematic diagrams of an example control process of a heating mode according to some embodiments of the present disclosure;
FIGS. 4A-4E illustrate schematic diagrams of a regenerative braking mode according to some embodiments of the present disclosure;
FIG. 5 illustrates a schematic diagram of a device implementing various embodiments of the present disclosure.

### DETAILED DESCRIPTION OF EMBODIMENTS

Embodiments of the present disclosure will be described in more details below with reference to the drawings. Although the drawings illustrate some embodiments of the present disclosure, it should be understood that the present disclosure can be implemented in various forms and should not be limited to the embodiments explained herein. On the contrary, the embodiments are provided to make the present disclosure more thorough and complete and to fully convey the scope of the present disclosure to those skilled in the art. It should be understood that the drawings and embodiments of the present disclosure are only used for illustrative purposes, and are not used to limit the scope of protection of the present disclosure.

In the embodiments described in the present disclosure, the term "includes" and its variants are to be read as open-ended terms that mean "includes, but is not limited to." The term "based on" is to be read as "based at least in part on." The terms "one example embodiment" and "one embodiment" are to be read as "at least one example embodiment." The terms "first", "second" and so on can refer to same or different objects. The following text also can include other explicit and implicit definitions.

As discussed above, at low temperatures, it is necessary to heat some components of a vehicle, such as battery or cabin. In this regard, in the related art, a dedicated heating system is usually provided to start or stop heating a target position such as a battery or a cabin by detecting the temperature of the battery. The heating of the target position is started when the temperature of the target position is lower than a predetermined temperature and stopped when the temperature reaches another predetermined temperature.

For example, positive temperature coefficient (PTC) heaters are installed in some electric vehicles. PTC heaters are used for interior heating and sometimes for battery temperature regulation. PTC heaters can be used to heat batteries, especially at low temperatures to optimize battery performance. However, the disadvantage of PTCs lies in volume and weight which lead to higher cost and integration effort in the vehicle.

In view of this, an embodiment of the present disclosure provides a solution for heating a target position of a vehicle by using heat generated by an inverter of a vehicle. In this solution, in the heating mode, a plurality of switching modules of the inverter are controlled so that the AC (e.g. including the AC generated by the motor during braking and the AC converted from the DC) between a battery and a motor enters diodes connected in series with switching modules to generate additional heat and thereby heating a coolant for cooling the inverter. After that, the coolant is conveyed through a coolant system to a target area covered by a cooling system in the vehicle to heat the battery. In this way, the energy of the vehicle can be fully utilized to reduce the demand for additional heating devices, thereby reducing cost. In addition, the solution is simple in logic and easy to implement, which can effectively improve the battery life, reduce noises generated during battery heating and optimize the driving experience when the target position is the battery.

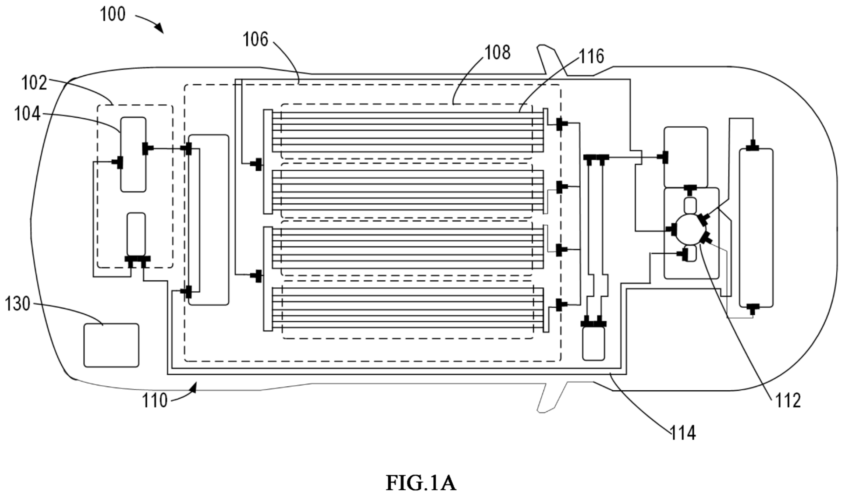

The solution and principle of embodiments of the present disclosure will be described in detail with reference to FIGS. 1A to 4E. FIG. 1A illustrates a schematic diagram of an example vehicle 100 in which various embodiments of the present disclosure may be implemented herein. As shown in FIG. 1A, the vehicle 100 includes a driving unit 102. The driving unit 102 includes a motor, an inverter 104, a controller and a cooling system. The motor, for example, may be an AC induction motor or a synchronous motor, and is usually powered by a battery pack 106 of the vehicle to be driven. The inverter 104 is used to convert a DC provided by the battery 108 in the battery pack 106 into an AC to drive the motor. In addition, when the vehicle is braking, the motor may also generate AC. At this time, the inverter 104 can convert the generated AC into the DC to be stored in the battery 108. The controller is used to receive signals from other systems of the vehicle, such as signals from accelerator pedal, brake pedal, battery management system and so on, and accurately controls output torque, speed and other parameters of the motor according to these signals and feedback information of the sensor, to realize various driving functions such as acceleration, deceleration and cruising of the vehicle. In addition, the controller can also cause the inverter 104 to perform the corresponding power conversion function. A control system 130 of the vehicle 100 may include controllers in different modules for calculating and processing information. Here, the controller of the driving unit 102 may be included in a control system 130 of the vehicle 100.

In addition, the driving unit also includes the cooling system for cooling the motor, the inverter 104, and other components. The cooling system may include, for example, a coolant pipe, a radiator, a cooling pump, and other components, and heat is removed by circulating the coolant. In some embodiments, the cooling system of the driving unit 102 is, for example, a part of a coolant system 110 of the vehicle 100. As an auxiliary component, the driving unit 102 may also include a sensor. The sensor includes, for example, a resolver used to detect the position and the rotational speed of a rotor of the motor, and to provide accurate feedback signals for the motor control to realize accurate torque control and energy recovery. For example, the sensor also includes a temperature sensor used to monitor the temperature of key components (i.e., the target position) such as motors and inverters. When the temperature is too high, the control system will take corresponding measures, such as reducing the power output or activating the cooling system to enhance heat dissipation to prevent the components from being damaged.

In the embodiment shown in FIG. 1A, the coolant system 110 of the vehicle 100 includes a coolant storage tank 112 for storing the coolant. When the liquid level of the coolant drops due to evaporation or leakage during circulation, the coolant in the tank will replenish the system to maintain the normal circulation of the coolant. The coolant system 110 also includes coolant pipes 114. The coolant pipes 114 are distributed throughout the vehicle body for conveying coolant to corresponding vehicle components to cool the corresponding components. The coolant pipes 114 are densely distributed in the battery pack 106 to form a coolant pipe group 116 for cooling the battery 108.

In addition, the coolant system 110 may also include a coolant pump that provides power for coolant circulation. Similarly, as an auxiliary component, the coolant system 110 may further include a plurality of temperature sensors. These temperature sensors distributed around the battery pack, the motor and other key components are capable of monitoring the temperature change of each component in real time and feeding back signals to the control system 130 of the vehicle. According to these feedback signals, the control system 130 can automatically adjust the flow rate of the coolant to achieve accurate temperature management. In addition, the control system 130 may also perform the method for heating the target position of the vehicle according to an embodiment of the present disclosure. For example, the control system 130 may control the inverter 104 into the heating mode upon receiving a heating request for a battery. In the heating mode, a plurality of switching elements of the inverter 104 may be controlled so that the AC between the battery and the motor enters one or more diodes respectively connected in parallel with the plurality of switching elements, but do not enter the switching elements. Because the efficiency of the diodes is lower than that of the switching elements, the AC generates more heat after entering the diodes than entering the switching elements, thereby generating additional heat. The control system 130 controls the coolant system 110 so that the coolant absorbs the additional heat generated by the inverter 104 and transfers the heat to the battery 108 to heat the battery 108.

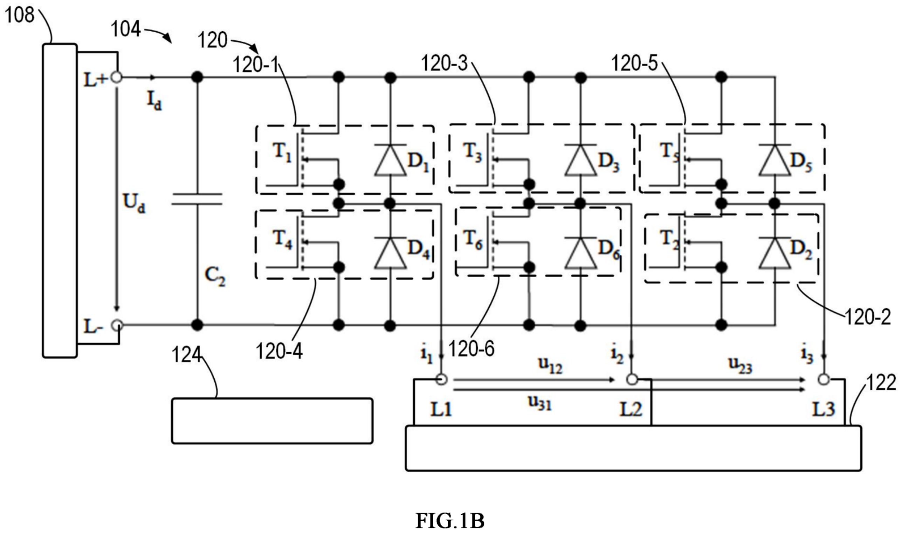

FIG. 1B illustrates a schematic diagram of an example driving system of an embodiment of the present disclosure. As shown in FIG. 1B, the driving system includes the battery 108, the inverter 104 and the motor 122 connected in sequence. The inverter 104 includes a plurality of switching modules 120. The plurality of switching modules 120 are controlled by a switching controller 124. The plurality of switching modules 120 include a switching module 120-1 (also referred to as a first switching module), a switching module 120-2 (also referred to as a sixth switching module), a switching module 120-3 (also referred to as a third switching module), a switching module 120-4 (also referred to as a second switching module), a switching module 120-5 (also referred to as a fifth switching module) and a switching module 120-6 (also referred to as fourth switching module).

Each of the plurality of switching modules 120 includes a switching element and a diode connected in parallel with the switching element. As shown in FIG. 1B, the switching module 120-1 includes a controllable switching element T1 and a diode D1. The switching module 120-2 includes a controllable switching element T2 and a diode D2. The switching module 120-3 includes a controllable switching element T3 and a diode D3. The switching module 120-4 includes a controllable switching element T4 and a diode D4. The switching module 120-5 includes a controllable switching element T5 and a diode D5. The switching module 120-6 includes a controllable switching element T6 and a diode D6. In some embodiments, the plurality of switching modules 120 may be Metal-Oxide-Semiconductor Field-Effect Transistors (MOSFET). In such an embodiment, the switching elements of the switching modules are transistors in the MOSFETs, and the diodes of the switching modules are body diodes in the MOSFETs.

As shown in FIG. 1B, the switching module 120-1 and the switching module 120-4 are connected in series at two ends of the battery 108, and the switching module 120-3 and the switching module 120-6 are connected in series at two ends of the battery 108 and the switching module 120-5 and the switching module 120-2 are connected in series at both ends of the battery 108. Here, the drain of the switching element T1 is connected to the positive terminal of the battery 108 and the cathode of the diode D1. The source of the switching element T1 is connected to the anode of the diode D1, the drain of the switching element T4 and a first phase L1 of the motor 122. The drain of the switching element T4 is connected to the cathode of the diode D4. The source of the switching element T4 is connected to the negative terminal of the battery 108 and the anode of the diode D4. Similarly, the drain of the switching element T3 is connected to the positive terminal of the battery 108 and the cathode of the diode D3. The source of the switching element T3 is connected to the anode of the diode D3, the drain of the switching element T6, and a second phase L2 of the motor 122. The drain of the switching element T6 is connected to the cathode of the diode D6. The source of the switching element T6 is connected to the negative terminal of the battery 108 and the anode of the diode D6. Finally, the drain of the switching element T5 is connected to the positive terminal of the battery 108 and the cathode of the diode D5. The source of the switching element T5 is connected to the anode of the diode D5, the drain of the switching element T2, and a third phase L3 of the motor 122. The drain of the switching element T2 is connected to the cathode of the diode D2. The source of the switching element T2 is connected to the negative terminal of the battery 108 and the anode of the diode D2.

During operation of the vehicle, the switching controller 124 can receive a control signal of the control system 130 to control the inverter. For example, the switching controller 124 can send Pulse-Width Modulation (PWM) signals to the switching elements of the inverter 104 according to the sinusoidal pulse width modulation (SPWM) to control the switching elements to turn on and off so that the inverter 104 converts the DC provided by the battery 108 into the desired AC. During braking of the vehicle, the switching controller 124 can receive the control signal of the control system 130 to initiate a power feedback mode. In this mode, the switching controller 124 can send the PWM signals to the switching elements of the inverter 104 according to SPWM to control the switching elements to turn on and off so that the inverter 104 can convert the AC generated by the motor 122 into the DC suitable for storage. Furthermore, according to the embodiment of the present disclosure, in the heating mode, the switching controller 124 can control the switching elements to turn on and off so that the AC at the negative half-wave flows through the diodes of the switching modules. In an embodiment in which the switching elements are MOSFETs, the switching controller 124 can send the control signal to a corresponding gate driver. The gate driver receives the control signal from the switching controller 124 as a low power input and generates a high current drive input for a gate of the corresponding MOSFET to turn the MOSFET on and off. Due to the inherent forward voltage drop of diodes, diodes usually have higher power losses than MOSFETs so that diodes generate more heat than MOSFETs when conducting AC. Therefore, the inverter 104 generates more additional heat than that generated in the normal driving mode.

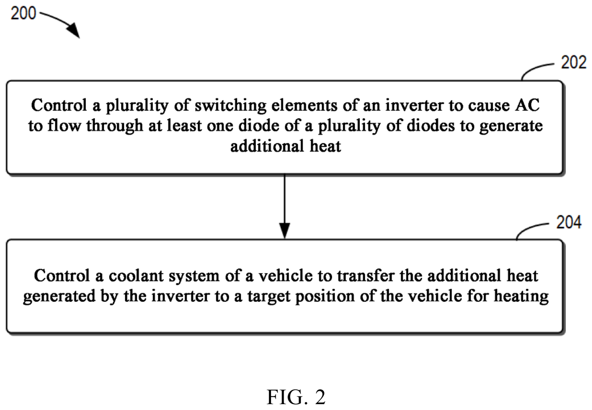

A solution for heating a battery according to an embodiment of the present disclosure will be described below with reference to FIGS. 2 to 4E. FIG. 2 illustrates a flowchart of an example method 200 for heating a battery according to some embodiments of the present disclosure. For discussion purposes, the method 200 will be described with below references to FIGS. 1A and 1B. The method 200 may be performed by the control system 130 shown in FIG. 1A, for example.

As shown in FIG. 2, at 202, the method 200 includes controlling the plurality of switching elements of the inverter so that the AC flows through at least one diode of the plurality of diodes to generate additional heat. In some embodiments, the method 200 optionally includes obtaining the heating request for the battery of the vehicle. For example, in the embodiment shown in FIG. 1A, the control system 130 can obtain the heating request for the battery 108 of the vehicle 100. In some embodiments, the heating request may be input by a user. In some alternative embodiments, the heating request may be automatically obtained based on a measurement value of the temperature sensor for the battery. For example, if the battery needs to be charged, a corresponding controller of the control system 130 can automatically generate the heating request when it is determined that the temperature of the battery is lower than a predetermined temperature threshold. Alternatively, the controller can automatically generate the heating request for the battery according to route navigation.

In some embodiments, after the heating request is received, the inverter can be controlled to enter the heating mode. In the heating mode, the switching elements in the inverter can be controlled, for example, so that the AC enters the switching elements. For example, in the embodiment shown in FIG. 1B, in the heating mode, the control system 130 can control the plurality of switching elements of the plurality of switching modules 120 so that the AC at the negative half-wave of the corresponding phase flows through the diode of the corresponding switching module, thereby generating additional heat. It should be understood that in the embodiment shown in FIG. 1B, only AC at the negative half-wave can flow through the diode. On the contrary, if the diode is connected in parallel with the switching element in an opposite orientation, the switching element of the inverter can also be controlled to make the AC to flow through the diode at the positive half-wave. The present disclosure is not intended to limit in this regard.

In some embodiments, the control system 130 can control two switching modules for the first phase of the motor to switch alternately in a preset period so that the AC of this phase flows through the switching elements of the switching modules, and can simultaneously turn off the switching modules in the following time period to make the AC of this phase flow through the diodes of the switching modules. In some alternative embodiments, the control system 130 can maintain the switching modules in an off state in the heating mode so that the generated AC always flows through the diodes of the switching modules.

At 204, the method 200 includes controlling the coolant system of the vehicle to transfer additional heat generated by the inverter to the target position of the vehicle for heating. For example, in the embodiment shown in FIG. 1A, the control system 130 can control the coolant system 110 of the vehicle 100 to activate circulation. The coolant adsorbs the heat generated by the inverter 104 in the coolant pipe thermally coupled to the inverter 104, and thereby heating up. After that, the high-temperature coolant is transferred to the coolant pipe group 116 at the battery 108 to heat the battery 108.

In this way, the energy of the vehicle can be fully utilized to reduce the demand for additional heating devices, thereby reducing cost. In addition, the solution is simple in logic and easy to implement, which can effectively improve the battery life, reduce the noises generated during battery heating and optimize the driving experience. Especially in the embodiment of the inverter using Silicon Carbide Metal-Oxide-Semiconductor Field-Effect Transistors (SiC MOSFETs), the inverter generates heat by the body diodes during reverse operation. Compared with other types of switching elements, the body diodes in SiC MOSFETs have significantly higher loss as they have higher forward voltage drops and are less efficient at conducting currents. Therefore, these body diodes have large switching and conduction losses. As a result, a significant amount of electrical energy is dissipated as heat, which can heat the vehicle's coolant system.

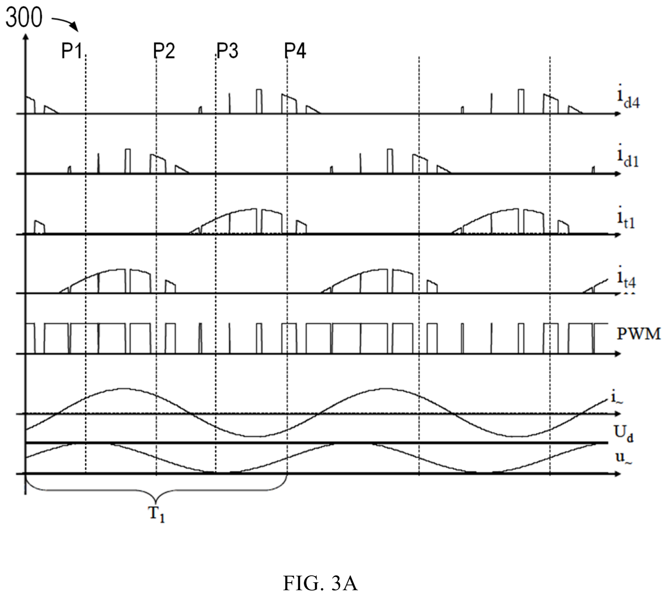

FIG. 3A illustrates a schematic diagram 300 of an example signal of the heating mode according to some embodiments of the present disclosure. The schematic diagram 300 of the signal shows a current i of the first phase and a corresponding voltage u in the heating mode. In addition, the schematic diagram 300 of the signal also shows PWM signal sequences for controlling the switching elements T1 and T4, and currents iₜ₁, iₜ₄, i_{d1} and i_{d4} of the switching elements T1 and T4 and the diodes D1 and D4. The PWM signal sequences are obtained based on SPWM, for example. A half cycle (that is, the AC is at a positive half-wave cycle) when the current i of the first phase is positive (also referred to as the first direction) includes a plurality of PWM signal sequences. At the positive half cycle, each PWM signal indicates that the switching element T4 to turn on and the switching element T1 to turn off. That is, during time periods of the PWM signals (also referred to as the first periods), the switching element T4 is turned on and the switching element T1 is turned off. During the time periods between PWM signals (also referred to as the second periods), the switching element T4 is turned off and the switching element T1 is turned off.

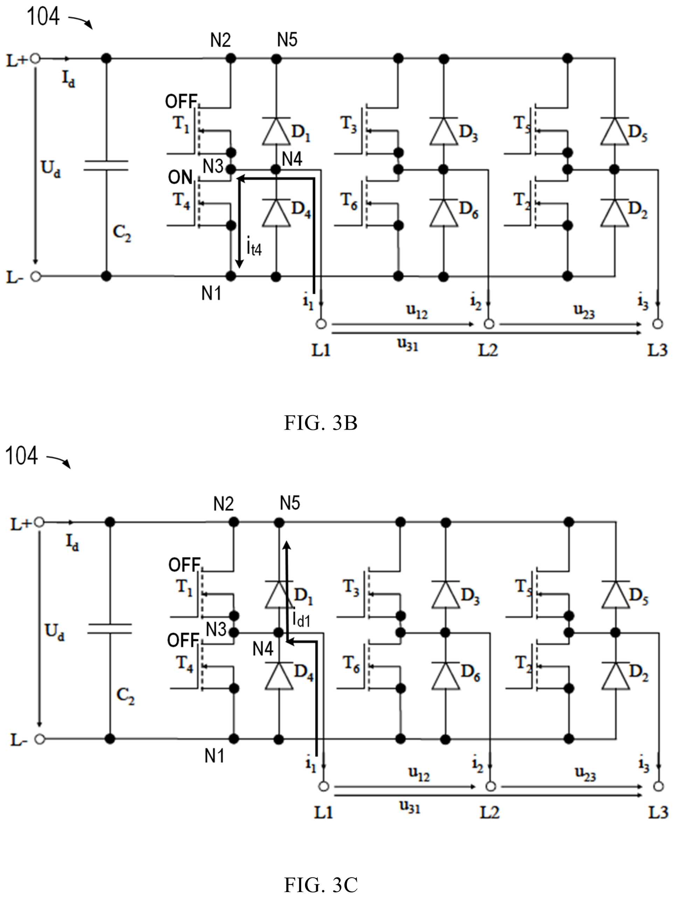

On the contrary, a half cycle (that is, the AC is at a negative half-wave cycle) when the current i of the first phase is negative (also referred to as the second direction) also includes a plurality of PWM signal sequences. At the negative half cycle, each PWM signal indicates that the switching element T4 is turned off and the switching element T1 is also turned off. That is, during time periods of the PWM signals (also referred to as the fourth periods), the switching element T4 is turned off and the switching element T1 is also turned off. During time periods between PWM signals (also referred to as the third periods), the switching element T4 is turned off and the switching element T1 is turned on. It should be understood that the PWM signals shown in the figure and the on-off state of the switching elements are only exemplary, and the on and off of the switching elements can also be controlled by control signals not shown. Next, the flow direction of the current in the inverter under different control signals will be described below with reference to FIGS. 3B to 3E respectively.

FIG. 3B illustrates a schematic diagram of the current of the first phase flowing in the inverter 104 at time P1. As shown in FIG. 3A, the time P1 is the time when the PWM signals indicate that the switching element T4 is turned on and the switching element T4 is turned off at the half cycle where the current i of the first phase is positive. As shown in FIG. 3B, the positive current from the first phase L1 flows through a node N4 between the diode D1 and the diode D4 to a node N3 between the switching element T1 and the switching element T4. At this time, the switching element T1 is turned off and the switch element T4 is turned on, that is, a branch where the switching element T4 is located, is conductive. Thereby, the current flows through the switching element T4. Therefore, the positive current iₜ₄ is obtained in the switching element T4.

FIG. 3C illustrates a schematic diagram of the current of the first phase flowing in the inverter 104 at time P2. As shown in FIG. 3A, the time P2 is the time when the PWM signals indicate that the switching element T4 is turned off and the switching element T1 is turned off at the half cycle where the current i of the first phase is positive. As shown in FIG. 3C, the positive current from the first phase L1 flows to the node N4 between the diode D1 and the diode D4. At this time, the switching element T1 is turned off and the switching element T4 is also turned off, that is, branches wherein the switching elements T4 and T1 are located are not conductive. Thereby, the current flows from the anode to the cathode of the diode D1. Therefore, the positive current i_{d1} is obtained in the switching element T4.

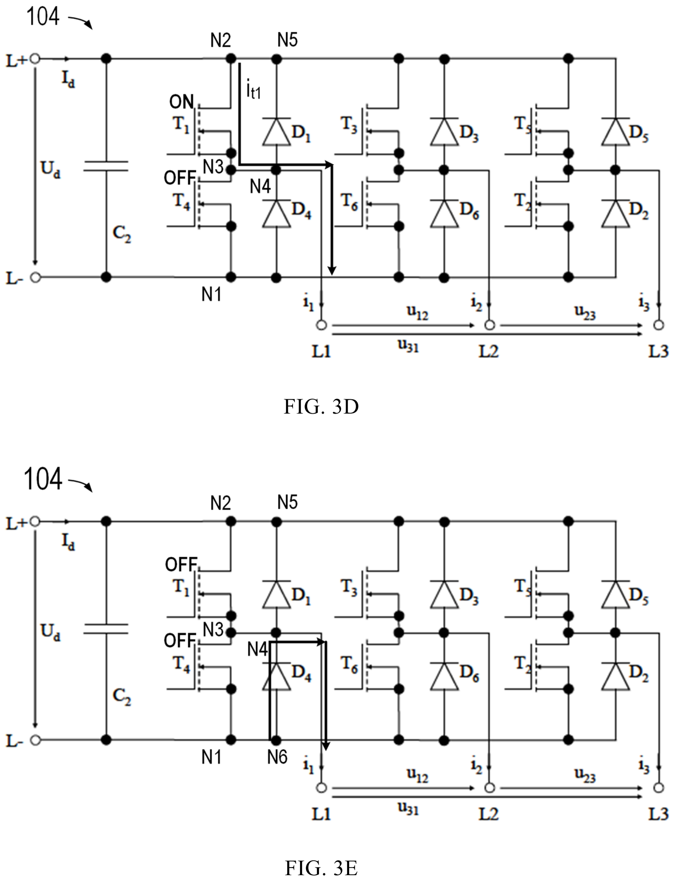

FIG. 3D illustrates a schematic diagram of the current of the first phase flowing in the inverter 104 at time P3. As shown in FIG. 3A, the time P3 is the time when the PWM signals indicate that the switching element T4 is turned off and the switching element T1 is turned on within a half cycle when the current i of the first phase is negative. As shown in FIG. 3D, the direction of the negative current of the first phase L1 is from the inverter 104 to the motor, which is equivalent to the positive current flowing to the motor. Based on this, the current flows from the node N2 through the closed switching element T1, and to the motor through the nodes N3 and N4. Therefore, the current iₜ₁ is obtained in the switching element T1.

FIG. 3E illustrates a schematic diagram of the current of the first phase flowing in the inverter 104 at time P4. As shown in FIG. 3A, the time P4 is the time when the PWM signals indicate that the switching element T4 is turned off and the switching element T1 is turned off within a half cycle when the current i of the first phase is negative. As shown in FIG. 3E, the direction of the negative current of the first phase L1 is from the inverter 104 to the motor, which is equivalent to the positive current flowing to the motor. Based on this, the current flows from the node N6 to the anode of the diode D4, then to the cathode of the diode D4, and to the motor through the node N4. Therefore, the current i_{d4} is obtained in the diode D4.

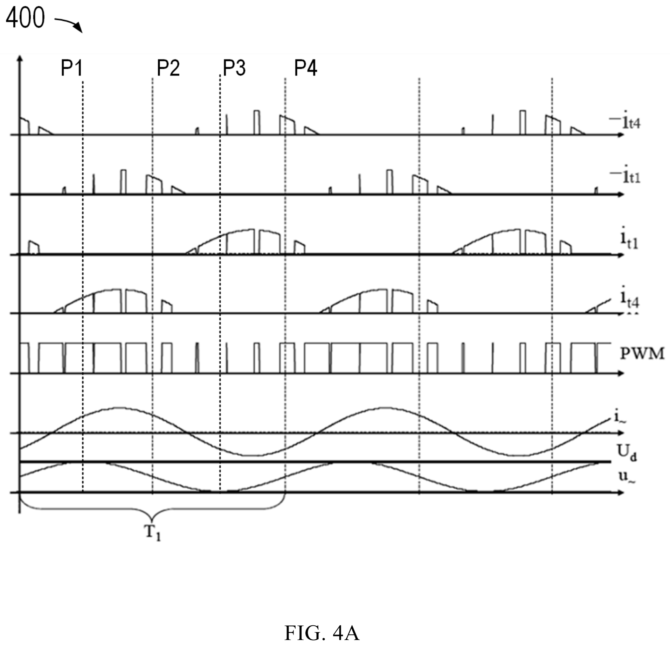

FIG. 4A illustrates a schematic diagram 400 of example signals of the power feedback mode according to some embodiments of the present disclosure. The schematic diagram 400 of the signals shows the current i generated by the first phase of the motor and the corresponding voltage u during the braking of the vehicle. In addition, the schematic diagram 400 of the signals also shows the PWM signal sequences for controlling the switching elements T1 and T4, the positive current iₜ₁, the positive current iₜ₄, the negative current -iₜ₁ and the negative current -iₜ₄ in the switching elements T1 and T4. The PWM signal sequences are obtained based on SPWM, for example. A half cycle when the current i of the first phase is positive (also referred to as the first direction) includes a plurality of PWM signal sequences. At the positive half cycle, each PWM signal indicates that the switching element T4 is turned on and the switching element T1 is turned off. That is, during the time periods of the PWM signals (also referred to as the first periods, corresponding to the PWM signals in FIG. 3A), the switching element T4 is turned on and the switching element T1 is turned off. During the time periods between PWM signals (also referred to as the second periods), the switching element T4 is turned off and the switching element T1 is turned on.

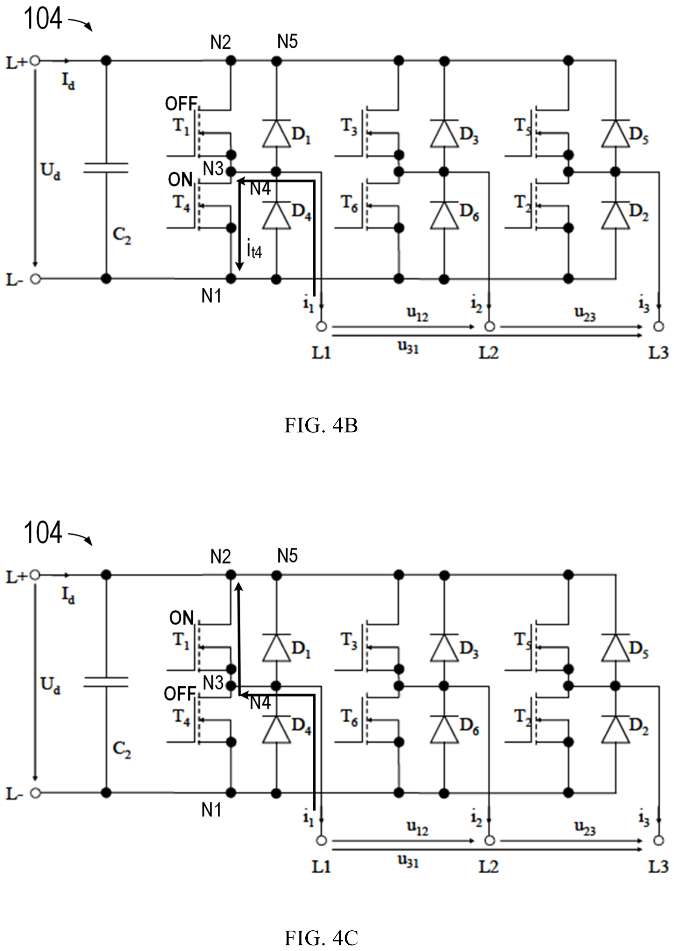

On the contrary, a half cycle when the current i of the first phase is negative (also referred to as the second direction) also includes a plurality of PWM signal sequences. At the negative half cycle, each PWM signal indicates that the switching element T4 is turned on and the switching element T1 is turned off. That is, during the time periods of the PWM signals (also referred to as the fourth periods), the switching element T4 is turned on, and the switching element T1 is turned off. During time periods between the PWM signals (also referred to as the third periods), the switching element T4 is turned off and the switching element T1 is turned on. Next, the flow direction of the current in the inverter under different control signals will be described below with reference to FIGS. 4B to 4E respectively.

FIG. 4B illustrates a schematic diagram of the current of the first phase flowing in the inverter 104 at time P1. As shown in FIG. 4A, the time P1 is the time when the PWM signals indicate that the switching element T4 is turned on and the switching element T4 is turned off at the half cycle where the current i of the first phase is positive. As shown in FIG. 4B, the positive current from the first phase L1 flows through the node N4 between the diode D1 and the diode D4 to the node N3 between the switching element T1 and the switching element T4. At this time, the switching element T1 is turned off and the switching element T4 is turned on, that is, a branch where the switching element T4 is located, is conductive. Thereby, the current flows through the switching element T4. Therefore, the positive current iₜ₄ is obtained in the switching element T4.

FIG. 4C illustrates a schematic diagram of the current of the first phase flowing in the inverter 104 at time P2. As shown in FIG. 4A, the time P2 is the time when the PWM signals indicate that the switching element T4 is turned off and the switching element T4 is turned off at the half cycle where the current i of the first phase is positive. As shown in figure 4C, the positive current from the first phase L1 flows through the node N4 between the diode D1 and the diode D4 to the node N3 between the switching element T1 and the switching element T4. At this time, the switching element T1 is turned on, and the switching element T4 is turned off, that is, a branch where the switching element T1 is located, is conductive. Thereby, the current flows through the switching element T1. Therefore, the positive current -iₜ₄ is obtained in the switching element T4.

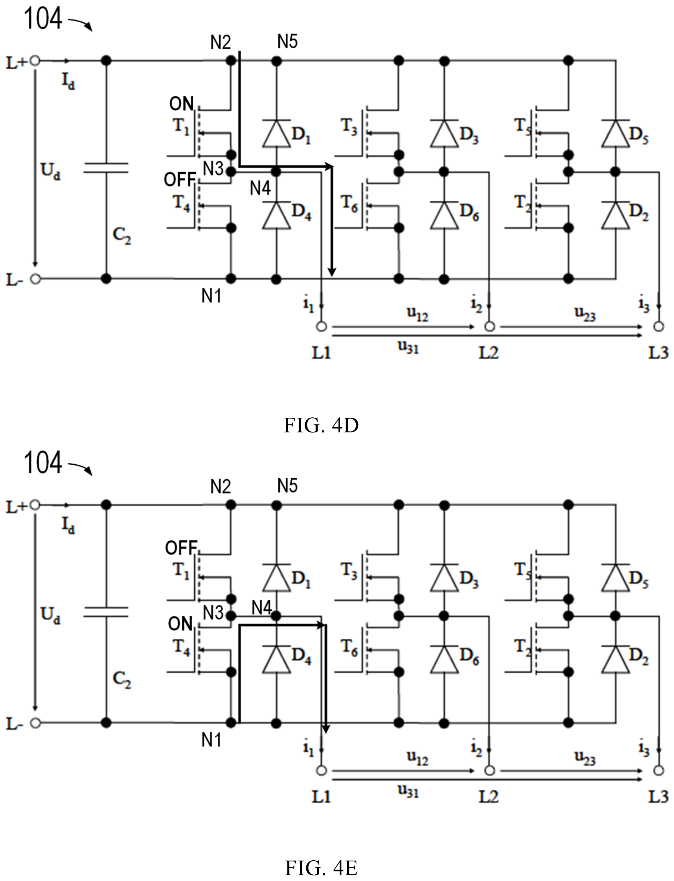

FIG. 4D illustrates a schematic diagram of the current of the first phase flowing in the inverter 104 at time P3. As shown in FIG. 4A, the time P3 is the time when the PWM signals indicate that the switching element T4 is turned off and the switching element T1 is turned on within a half cycle when the current i of the first phase is negative. As shown in FIG. 4D, the direction of the negative current of the first phase L1 is from the inverter 104 to the motor, which is equivalent to the positive current flowing to the motor. Based on this, the current flows from the node N2 through the closed switching element T1, and to the motor via the nodes N3 and N4. Therefore, the positive current iₜ₁ is obtained in the switching element T1.

FIG. 4E illustrates a schematic diagram of the current of the first phase flowing in the inverter 104 at time P4. As shown in FIG. 4A, the time P4 is the time when the PWM signals indicate that the switching element T4 is turned on and the switching element T1 is turned off within a half cycle when the current i of the first phase is negative. As shown in FIG. 4E, the direction of the negative current of the first phase L1 is from the inverter 104 to the motor, which is equivalent to the positive current flowing to the motor. Based on this, the current flows from the node N4 through the closed switching element T4 to the node N3, and to the motor through the node N4. Therefore, the negative current -iₜ₄ is obtained in the switching element T4.

By comparing the embodiments shown in FIGS. 3A to 3E with the embodiments shown in FIGS. 4A to 4E, it can be seen that through different control solutions for the switching elements, the flow direction of a regenerative current generated by the motor during the braking of the vehicle can be controlled. When the regenerative current is controlled to flow through the diodes in the switching modules, the regenerative current generates more heat as the efficiency of the diodes is lower than that of the switching elements, thus providing better heating efficiency.

It should be understood that although in the embodiment shown in FIGS. 3A to 4E, only the control solution of the two switching modules for the first phase of the motor is described, and the other four switching modules are also controlled for the current of the corresponding phase. For example, in a three-phase motor, the three-phase currents are phase-shifted by 120° from each other. Therefore, a similar switching control solution can be executed according to the phase difference to perform the method for heating the battery of the embodiments of the present disclosure.

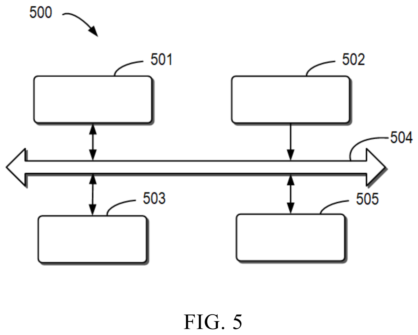

FIG. 5 illustrates a schematic diagram of an exemplary device 500 implementing various embodiments of the present disclosure. As shown, the device 500 includes a processor 501, which can execute various suitable actions and processing based on the computer program instructions stored in the read-only memory (ROM) 502 or computer program instructions loaded in the random-access memory (RAM) 503. The RAM 503 can also store all kinds of programs and data required by the operations of the device 500. The processor 501, the ROM 502 and the RAM 503 are connected to each other via a bus 504. An input/output (I/O) interface 505 is also connected to the bus 504.

The above described each procedure and processing, such as the method 200, can be executed by the processor 501. For example, in some embodiments, the method 200 can be implemented as a computer software program tangibly included in the machine-readable medium. In some embodiments, the computer program can be partially or fully loaded and/or mounted to the device 500 via the ROM 502. When the computer program is loaded to the RAM 503 and executed by the processor 501, one or more actions of the above described method 200, method 300, method 400A and method 500A can be implemented.

The present disclosure can be a method, apparatus, a system and/or a computer program product. The computer program product can include a computer-readable storage medium, on which the computer-readable program instructions for executing various aspects of the present disclosure are loaded.

The computer-readable storage medium can be a tangible device that maintains and stores instructions for use by instruction execution devices. The computer-readable storage medium can be, but not limited to, such as electrical storage device, magnetic storage device, optical storage device, electromagnetic storage device, semiconductor storage device or any appropriate combinations of the above. More concrete examples of the computer-readable storage medium (non-exhaustive list) include: random-access memory (RAM), read-only memory (ROM), erasable programmable read-only memory (EPROM or flash), static random-access memory (SRAM), and any appropriate combinations of the above. The computer-readable storage medium utilized here is not interpreted as transitory signals per se, such as radio waves or freely propagated electromagnetic waves, electromagnetic waves propagated via waveguide or other transmission media (such as optical pulses via fiber-optic cables), or electric signals propagated via electric wires.

The described computer-readable program instruction can be downloaded from the computer-readable storage medium to each computing/processing device, or to an external computer or external storage via Internet, local area network, wide area network and/or wireless network. The network can include copper transmission cable, optical fiber transmission, wireless transmission, router, firewall, switch, network gate computer and/or edge server. The network adapter card or network interface in each computing/processing device receives computer-readable program instructions from the network and forwards the computer-readable program instructions for storage in the computer-readable storage medium of each computing/processing device.

The computer program instructions for executing operations of the present disclosure can be assembly instructions, instructions of instruction set architecture (ISA), machine instructions, machine-related instructions, microcodes, firmware instructions, state setting data, or source codes or target codes written in any combinations of one or more programming languages, wherein the programming languages consist of object-oriented programming languages, e.g., Smalltalk, C++ and so on, and traditional procedural programming languages, such as "C" language or similar programming languages. The computer-readable program instructions can be implemented fully on the user computer, partially on the user computer, as an independent software package, partially on the user computer and partially on the remote computer, or completely on the remote computer or server. In the case that remote computer is involved, the remote computer can be connected to the user computer via any type of networks, including local area network (LAN) and wide area network (WAN), or to the external computer (e.g., connected via Internet using the Internet service provider). In some embodiments, state information of the computer-readable program instructions is used to customize an electronic circuit, e.g., programmable logic circuit, field programmable gate array (FPGA) or programmable logic array (PLA). The electronic circuit can execute computer-readable program instructions to implement various aspects of the present disclosure.

Various aspects of the present disclosure are described here with reference to flow chart and/or block diagram of method, apparatus (system) and computer program products according to embodiments of the present disclosure. It should be understood that each block of the flow chart and/or block diagram and the combination of various blocks in the flow chart and/or block diagram can be implemented by computer-readable program instructions.

The computer-readable program instructions can be provided to the processing unit of a general-purpose computer, a dedicated computer or other programmable data processing apparatus to manufacture a machine, such that the instructions that, when executed by the processing unit of the computer or other programmable data processing apparatus, generate an apparatus for implementing functions/actions specified in one or more blocks in the flow chart and/or block diagram. The computer-readable program instructions can also be stored in the computer-readable storage medium and cause the computer, programmable data processing apparatus and/or other devices to work in a particular manner, such that the computer-readable medium stored with instructions contains an article of manufacture, including instructions for implementing various aspects of the functions/actions specified in one or more blocks of the flow chart and/or block diagram.

The computer-readable program instructions can also be loaded into computer, other programmable data processing apparatus or other devices, so as to execute a series of operation steps on the computer, other programmable data processing apparatus or other devices to generate a computer-implemented procedure. Therefore, the instructions executed on the computer, other programmable data processing apparatus or other devices implement functions/actions specified in one or more blocks of the flow chart and/or block diagram.

The flow chart and block diagram in the drawings illustrate system architecture, functions and operations that may be implemented by system, method and computer program product according to multiple implementations of the present disclosure. In this regard, each block in the flow chart or block diagram can represent a module, a part of program segment or code, wherein the module and the part of program segment or code include one or more executable instructions for performing specified logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing specified functions or actions, or by a combination of dedicated hardware and computer instructions.

Various implementations of the present disclosure have been described above and the above description is only exemplary rather than exhaustive and is not limited to the implementations of the present disclosure. The selection of terms in the text aims to best explain principles and actual applications of each implementation and technical improvements made in the market by each embodiment, or enable other ordinary skilled in the art to understand implementations of the present disclosure.

## Claims

1. A method for heating a target position of a vehicle, the vehicle comprising an inverter (104) for conversion between an alternating current (AC) and a direct current (DC) between a motor (124) and a battery (108) of the vehicle, the inverter (104) comprising a plurality of switching elements and a plurality of diodes connected in parallel with the plurality of switching elements, and the method comprising:
controlling the plurality of switching elements of the inverter (104) to cause the AC to flow through at least one diode of the plurality of diodes, thereby generating additional heat; and
controlling a coolant system (110) of the vehicle (100) to transfer the additional heat generated by the inverter (104) to a target position of the vehicle for heating.

2. The method according to claim 1, wherein controlling the plurality of switching elements of a plurality of switching modules (120) of the inverter (104) to cause the AC to flow through the at least one diode of the plurality of switching modules (120) comprises:
controlling, during a negative half-wave of the AC, the plurality of switching elements of the plurality of switching modules (120) to cause the negative half-wave of the AC to flow through the at least one diode.

3. The method according to claim 2, wherein controlling the plurality of switching elements of the plurality of switching modules (120) to cause the negative half-wave of the AC to flow through the at least one diode comprises:
during a preset first time period, turning off a first switching element (T1) of a first switching module (120-1) among the plurality of switching modules (120), turning on a second switching element (T4) of a second switching module (120-4) among the plurality of switching modules (120), wherein a series connection of the first switching element (T1) and the second switching element (T4) is connected in parallel with the battery (108) and is configured for a first phase of the motor (124); and
during a second time period after the first time period, turning off the first switching element (T1) and the second switching element (T4) to cause the AC to flow through a first diode (D1) connected in parallel with the first switching element (T1),
wherein, during the first time period, the AC is in a positive half-wave and during the second time period, the AC is in the negative half-wave.

4. The method according to claim 3, wherein a first half-cycle in which the AC has a first direction comprises the plurality of first time periods based on sinusoidal pulse width modulation, SPWM, and the second time periods are among the first time periods.

5. The method according to claim 4, wherein a second half-cycle in which the AC has a second direction comprises a plurality of fourth time periods based on the SPWM, and third time periods are among the fourth time periods, and
wherein controlling the plurality of switching modules (120) to cause the AC to flow through the at least one diode further comprises:
during a preset third time period, turning off the second switching element (T4), and turning on the first switching element (T1); and
during the fourth time period after the third time period, turning off the second switching element (T4) and the first switching element (T1).

6. The method according to any of the claims 3 - 5, further comprising:
during the first time period, turning off the first switching element (T1) and turning on the second switching element (T4); and
during the second time period, turning on the first switching element (T1) and turning off the second switching element (T4).

7. The method according to claim 5 or 6, further comprising:
during the third time period, turning off the second switching element (T4) and turning on the first switching element (T1); and
during the fourth time period, turning on the second switching element (T4) and turning off the first switching element (T1).

8. The method according to any of the claims 2 - 7, wherein the switching module comprises a metal-oxide-semiconductor field-effect transistors, MOSFET, and wherein the switching element comprises a transistor of the MOSFET, and the diode comprises a body diode of the MOSFET.

9. The method according to any of the claims 3 - 7, wherein the inverter (104) further comprises a third switching module, a fourth switching module, a fifth switching module and a sixth switching module, and a series connection of a third switching element (T3) of the third switching module and a fourth switching element (T6) of the fourth switching module is connected in parallel with the battery (108) and is configured for a second phase of the motor, and a series connection of a fifth switching element (T5) of the fifth switching module and a sixth switching element (T2) of the sixth switching module is connected in parallel with the battery (108) and is configured for a third phase of the motor, and
wherein controlling the plurality of switching elements of the plurality of switching modules (120) to cause the negative half-wave of the AC to flow through the at least one diode comprises:
based on a difference between the first phase, the second phase and the third phase, controlling the third switching element (T3), the fourth switching element (T6), the fifth switching element (T5) and the sixth switching element (T2) to cause the AC in the first phase to flow through a diode of the third switching module, and cause the AC in the second phase to flow through a diode of the fifth switching module.

10. A controller (500), comprising:
at least one processor (501); and
memories (502, 503) coupled to the at least one processor (501) and having instructions stored thereon that, when executed by the at least one processor (501), causing the controller (500) to perform the method of any of claims 1-9.

11. A vehicle heating system, comprising:
an inverter (104) configured to perform power conversion between a battery (108) and a motor (124);
a coolant system (110) in thermal contact with the inverter (104); and
the controller (500) according to claim 10, configured to control the coolant system (110) to transfer heat generated by the inverter (104).

12. A computer program product comprising computer-executable instructions that, when executed by a processor, implement the method of any of claims 1 to 9.
